(19) **Europäisches Patentamt / European Patent Office / Office européen des brevets**

(11) **EP 2 768 784 B1**

(12) **FASCICULE DE BREVET EUROPEEN**

(45) Date de publication et mention de la délivrance du brevet:
**30.12.2015 Bulletin 2015/53**

(21) Numéro de dépôt: **12787774.4**

(22) Date de dépôt: **17.10.2012**

(51) Int Cl.:
**C03C 17/36** $^{(2006.01)}$

(86) Numéro de dépôt international:
**PCT/FR2012/052363**

(87) Numéro de publication internationale:
**WO 2013/057425 (25.04.2013 Gazette 2013/17)**

(54) **VITRAGE DE CONTROLE SOLAIRE COMPRENANT UNE COUCHE D'UN ALLIAGE Ni/Cu**

SONNENSCHUTZVERGLASUNG MIT EINER SCHICHT AUS EINER Ni/Cu-HALTIGEN LEGIERUNG

SOLAR CONTROL GLAZING COMPRISING A LAYER OF AN ALLOY CONTAINING Ni/Cu

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.10.2011 FR 1159542**

(43) Date de publication de la demande:
**27.08.2014 Bulletin 2014/35**

(73) Titulaire: **Saint-Gobain Glass France**
**92400 Courbevoie (FR)**

(72) Inventeurs:
- **SINGH, Laura Jane**
  **75011 Paris (FR)**
- **PALACIOS-LALOY, Agustin**
  **75014 Paris (FR)**
- **SANDRE-CHARDONNAL, Etienne**
  **44200 NANTES (FR)**

(74) Mandataire: **Lucas, Francois**
**SAINT-GOBAIN RECHERCHE**
**Département Propriété Industrielle**
**39, Quai Lucien Lefranc**
**93300 Aubervilliers (FR)**

(56) Documents cités:
**EP-A1- 0 747 329     DE-U1- 8 914 938**
**GB-A- 1 309 881**

- **ANGADI M A ET AL: "HEAT MIRRORS USING CEO2/CU/CEO2 MULTILAYER FILMS", JOURNAL OF MATERIALS SCIENCE LETTERS, CHAPMAN AND HALL LTD. LONDON, GB, vol. 8, no. 4, 1 avril 1989 (1989-04-01), pages 391-394, XP000036752, ISSN: 0261-8028, DOI: 10.1007/BF00720683**

EP 2 768 784 B1

**Description**

L'invention se rapporte au domaine des substrats ou articles verriers, en particulier du type vitrage de bâtiments, comprenant à leur surface des revêtements du type couches minces leur conférant des propriétés de contrôle solaire. Un tel vitrage peut également être appliqué dans le domaine de l'automobile. Par vitrage, on entend au sens de la présente invention tout produit verrier constitué par un ou plusieurs substrats verriers, en particulier les simples vitrages, les doubles vitrages, les triples vitrages etc.

De tels vitrages sont munis d'empilements de couches minces qui agissent sur le rayonnement solaire incident par absorption et par réflexion. Ils sont regroupés sous la désignation de vitrage de contrôle solaire. Ils sont utilisés soit essentiellement pour assurer une protection solaire (fonction antisolaire) soit essentiellement pour assurer une isolation thermique de l'habitacle ou de l'habitation (fonction bas émissive).

Par antisolaire, on entend ainsi au sens de la présente invention la faculté du vitrage de limiter le flux énergétique, en particulier le rayonnement Infrarouge (IR) le traversant depuis l'extérieur vers l'intérieur de l'habitation ou de l'habitacle.

Par bas émissif, on entend un vitrage muni d'au moins une couche fonctionnelle lui conférant une émissivité normale $\varepsilon_n$ inférieure à 50%, voire inférieure à 40%, l'émissivité étant définie par la relation :

$$\varepsilon_n = 1 - R_n,$$

dans laquelle $R_n$ est le facteur de réflexion selon la normale (selon l'annexe A de la norme internationale IS 10292) du vitrage.

D'une manière générale, toutes les caractéristiques lumineuses et énergétiques présentées dans la présente description sont obtenues selon les principes et méthodes décrits dans les normes internationale ISO 9050 (2003) et ISO 10292 (1994) et des normes européennes EN 410 (1998) et EN 673 (1998), se rapportant à la détermination des caractéristiques lumineuses, solaires et énergétiques des vitrages utilisés dans le verre pour la construction.

En outre, associés au(x) substrat(s) verrier(s), ces revêtements doivent être esthétiquement plaisants, c'est-à-dire que le vitrage muni de son empilement doit présenter une colorimétrie, en transmission comme en réflexion, suffisamment neutre pour ne pas incommoder les utilisateurs, ou alternativement une teinte légèrement bleue ou verte recherchée notamment dans le domaine du bâtiment. Ces revêtements sont de façon classique déposés par des techniques de dépôt du type CVD pour les plus simples ou le plus souvent à l'heure actuelle par des techniques de dépôt par pulvérisation sous vide, souvent appelé magnétron dans le domaine, notamment lorsque le revêtement est constitué d'un empilement complexe de couches successives dont les épaisseurs ne dépassent pas quelques nanomètres ou quelques dizaines de nanomètres.

Le plus souvent les empilements en couches minces présentent des propriétés de contrôle solaire essentiellement par les propriétés intrinsèques d'une ou plusieurs couches actives, désignées comme fonctionnelle dans la présente description. Par couche active ou fonctionnelle, on entend ainsi une couche agissant de manière sensible sur le flux de rayonnement solaire traversant ledit vitrage. Une telle couche active, de façon connue, peut fonctionner soit principalement en mode de réflexion du rayonnement Infrarouge, soit principalement en mode d'absorption du rayonnement Infrarouge. Le plus souvent, ces couches antisolaires fonctionnent pour partie par réflexion et pour partie par absorption, comme déjà expliqué précédemment.

Notamment, les empilements les plus performants commercialisés à l'heure actuelle incorporent au moins une couche fonctionnelle métallique du type Argent fonctionnant essentiellement sur le mode de la réflexion d'une majeure partie du rayonnement IR (infrarouge) incident. Leur émissivité normale ne dépasse pas quelques pourcents. Ces empilements sont ainsi utilisés principalement en tant que vitrages du type bas émissifs (ou low-e en anglais) pour l'isolation thermique des bâtiments. Ces couches sont cependant très sensibles à l'humidité et sont donc exclusivement utilisées dans des doubles vitrages, en face 2 de celui-ci pour être protégées de l'humidité. Les empilements selon l'invention ne comprennent pas de telles couches du type Argent, ou encore de couches du type Or ou Platine ou alors en quantités très négligeables, notamment sous formes d'impuretés inévitables.

D'autres couches métalliques à fonction antisolaire ont également été reportées dans le domaine, comprenant des couches fonctionnelles du type Nb, Ta ou W ou des nitrures de ces métaux, tel que décrit par exemple dans la demande WO01/21540. Au sein de telles couches, le rayonnement solaire est cette fois majoritairement absorbé de manière non sélective par la ou les couches fonctionnelles, c'est-à-dire que le rayonnement IR (c'est-à-dire dont la longueur d'onde est compris entre environ 780 nm et 2500 nm) et le rayonnement visible (dont la longueur d'onde est compris entre environ et 380 et 780 nm) sont absorbés sans distinction. Dans de tels vitrages, les valeurs de l'émissivité normale $\varepsilon_n$ sont en général élevées. Des valeurs d'émissivité plus faibles peuvent uniquement être obtenues lorsque la couche fonctionnelle est relativement épaisse, en particulier d'au moins 20 nm pour le niobium métallique. En raison de l'absorption non sélective de cette même couche, les coefficients de transmission lumineuse de tels vitrages sont nécessairement très faibles, généralement très inférieurs à 30. Au final, au vu de telles caractéristiques, il n'apparait pas possible d'obtenir à partir de tels empilements des vitrages de contrôle solaire combinant des émissivités normales relativement basses, typiquement inférieures à 30%, et notamment de l'ordre de 25% ou même 20%, tout en conservant une transmission lumineuse suffisamment élevée, c'est à dire typiquement supérieure à 30%.

La publication de brevet EP 747 329 B2 décrit des empilements dont la couche fonctionnelle est constituée par du Nickel pur. Le Nickel étant un métal ferromagnétique, il s'avère cependant très difficile et couteux de le déposer en couche, à l'échelle industrielle, par les techniques classiques de dépôt du type pulvérisation magnétron, incluant la pulvérisation cathodique d'une cible métallique du matériau à déposer, en utilisant les forces d'un champ magnétique (aussi appelé sputtering magnetron en anglais).

Pour éviter ce problème, le brevet EP 747 329 B2 indique l'utilisation possible d'alliages comprenant majoritairement du Nickel et du Chrome, la proportion de Ni étant d'au moins 10% atomique.

La demande EP067257 A1 décrit alternativement l'utilisation comme couche fonctionnelle antisolaire d'un alliage comprenant du nickel et du cuivre, dans des proportions de 1 à 25 pour cent poids de Nickel et 75 à 99% poids de Cuivre.

La demande GB 1309881 décrit un vitrage transparent comprenant une couche fonctionnelle contenant majoritairement du cuivre et 5 à 15% massique de nickel.

Le but de la présente invention est ainsi de fournir des vitrages comprenant un empilement de couches leur conférant des propriétés de contrôle solaire telles que précédemment décrites, c'est-à-dire une transmission lumineuse $T_L$ typiquement supérieure à 30%, de préférence supérieure ou égale à 40, et une émissivité normale $\varepsilon_n$ inférieure à 30%, voire inférieure à 25%, ledit empilement étant durable dans le temps, notamment lorsqu'il est directement disposé sur une face du vitrage exposé vers l'intérieur ou même l'extérieur du bâtiment ou de l'habitacle, sans précaution particulière. Un autre but de la présente invention est de fournir des vitrages antisolaires dont ledit empilement est capable de subir un traitement thermique tel qu'une trempe, un bombage ou plus généralement un traitement thermique à des températures supérieures sans perte de ses propriétés optiques et énergétiques. En particulier, les vitrages munis de couches selon l'invention présentent et conservent après le traitement thermique, notamment en transmission ou en réflexion, une couleur sensiblement neutre ou encore une teinte bleue-verte peu intense, telle que recherchée notamment dans le secteur du bâtiment. Par couleur neutre ou teinte bleue-verte, on entend au sens de la présente invention, dans le système de colorimétrie LAB (L*, a*, b*), des valeurs a* et b* inférieures ou proches de 10 et de préférence négatives.

Un vitrage selon l'invention permet également de sélectionner le rayonnement le traversant, en favorisant plutôt la transmission des ondes lumineuses, c'est-à-dire dont la longueur d'onde est comprise entre environ 380 et 780 nm et en limitant la traversée du rayonnement infrarouge, dont la longueur d'onde est supérieur à 780 nm.

Selon l'invention, il devient ainsi possible de maintenir une forte illumination de la pièce ou de l'habitacle protégé par le vitrage, tout en minimisant la quantité de chaleur y entrant.

Selon un autre aspect, le vitrage selon la présente invention présente également des propriétés d'isolation thermique grâce aux propriétés bas-émissives de la couche utilisée, permettant de limiter les échanges de chaleur entre l'intérieur et l'extérieur du bâtiment.

Selon un autre avantage de la présente invention, les vitrages munis des empilements selon l'invention sont simples à produire, par rapport à d'autres vitrages connus à propriétés antisolaires, notamment ceux comprenant un empilement à base d'argent.

En outre, ils sont résistants à l'humidité et à la rayure. Ils peuvent ainsi être avantageusement être utilisés en temps que vitrage simple (un seul substrat verrier), l'empilement étant avantageusement tourné vers la face interne du bâtiment ou de l'habitacle à protéger.

Plus précisément, la présente invention se rapporte à un vitrage à propriétés de contrôle solaire comprenant au moins un substrat verrier sur lequel est déposé un empilement de couches, ledit empilement comprenant une couche constituée dans un alliage comprenant ou constituée par du Nickel et du Cuivre, dans lequel le pourcentage atomique de Cuivre est supérieur à 1% et inférieur à 25% et dans lequel le pourcentage atomique de Nickel est supérieur à 75% et inférieur à 99%. Ladite couche constituée dans un alliage comprenant du Nickel et du Cuivre est la couche fonctionnelle de l'empilement, c'est-à-dire qu'elle est à l'origine des propriétés de contrôle solaire du vitrage ou au moins de l'essentiel desdites propriétés.

Selon des modes préférés de réalisation de la présente invention, qui peuvent bien évidemment le cas échéant être combinés entre eux:

- Le pourcentage atomique du cuivre dans l'alliage est compris entre 2% et 20%, par exemple entre 5 et 10% ou encore entre 2 et 5%.
- Le pourcentage atomique du nickel dans l'alliage est compris entre 80% et 95%,
- L'épaisseur de ladite couche fonctionnelle est comprise entre 5 et 25 nanomètres, de préférence entre 10 et 20 nanomètres.
- l'alliage est constitué uniquement de Nickel et de Cuivre, les autres éléments n'étant présents que sous forme d'impuretés inévitables.

- L'empilement est constitué par la succession des couches suivantes, à partir de la surface du substrat verrier:

    - une ou plusieurs couches inférieures de protection de la couche fonctionnelle contre la migration des ions alcalins issus du substrat verrier, d'épaisseur géométrique, au total, comprise entre 5 et 150 nm,
    - ladite couche fonctionnelle constituée par ledit alliage comprenant ou constitué par du Nickel et du Cuivre,
    - une ou plusieurs couches supérieures de protection de la couche fonctionnelle contre l'oxygène de l'air, notamment lors d'un traitement thermique tel qu'une trempe ou un recuit, la ou lesdites couches étant d'épaisseur géométrique, au total, comprise entre 5 et 150 nm.

- La ou les couches de protection inférieures et supérieures sont choisies parmi le nitrure de Silicium éventuellement dopé par Al, Zr, B, le nitrure d'aluminium AlN, l'oxyde d'étain, un oxyde mixte de zinc ou d'étain $SnyZn_zO_x$, l'oxyde de silicium $SiO_2$, l'oxyde de titane non dopé $TiO_2$, les oxynitrures de silicium $SiO_xN_y$.
- L'empilement comprend la succession des couches suivantes, à partir de la surface du substrat verrier:

    - une couche inférieure d'épaisseur comprise entre 5 et 150 nm, de préférence entre 30 et 70 nm, de nitrure de Silicium éventuellement dopé par Al, Zr, B ou de nitrure d'aluminium AlN,
    - ladite couche fonctionnelle constituée par ledit alliage comprenant ou constituée par du Nickel et de Cuivre,
    - une couche supérieure d'épaisseur comprise entre 5 et 150 nm, de préférence entre 30 et 70 nm, de nitrure de Silicium éventuellement dopé par Al, Zr, B ou de nitrure d'aluminium AlN.

- L'empilement comprend au moins deux couches fonctionnelles constituées par ledit alliage comprenant ou constituée par du Nickel et du Cuivre tel que précédemment décrit, chacune desdites couches étant séparée dans l'empilement de la suivante par au moins une couche intermédiaire d'un matériau diélectrique.
- Ladite couche intermédiaire comprend au moins une couche d'un matériau choisi parmi le nitrure de Silicium éventuellement dopé par Al, Zr, B, le nitrure d'aluminium AlN, l'oxyde d'étain, un oxyde mixte de zinc ou d'étain $SnyZn_zO_x$, l'oxyde de silicium $SiO_2$, l'oxyde de titane non dopé $TiO_2$, les oxynitrures de silicium $SiO_xN_y$.
- l'empilement comprend la succession des couches suivantes, à partir de la surface du substrat verrier :

    - une couche inférieure d'épaisseur comprise entre 5 et 150 nm, de préférence entre 30 et 70 nm, de nitrure de Silicium éventuellement dopé par Al, Zr, B ou de nitrure d'aluminium AlN,
    - une première couche fonctionnelle constituée par ledit alliage comprenant ou constituée par de Nickel et de Cuivre tel que précédemment décrit, l'épaisseur de ladite couche fonctionnelle étant notamment comprise entre 5 et 25 nm, de préférence entre 5 et 10 nm,
    - une couche intermédiaire d'épaisseur comprise entre 5 et 150 nm, de préférence entre 5 et 50 nm, tout particulièrement entre 5 et 15 nm, comprenant au moins une couche d'un matériau choisi parmi le nitrure de Silicium éventuellement dopé par Al, Zr, B, le nitrure d'aluminium AlN, oxyde d'étain, un oxyde mixte de zinc ou d'étain $SnyZn_zO_x$, l'oxyde de silicium $SiO_2$, l'oxyde de titane non dopé $TiO_2$, les oxynitrures de silicium $SiO_xN_y$, de préférence de nitrure de silicium éventuellement dopé par Al, Zr, B,
    - une deuxième couche fonctionnelle constituée par ledit alliage comprenant ou constitué par du Nickel et du Cuivre, l'épaisseur de ladite couche fonctionnelle étant notamment comprise entre 5 et 25 nm, de préférence entre 5 et 10 nm,
    - une couche supérieure d'épaisseur comprise entre 5 et 150 nm, de préférence entre 30 et 70 nm, de nitrure de Silicium éventuellement dopé par Al, Zr, B ou le nitrure d'aluminium AlN.

- l'empilement comprend en outre des couches protectrices supplémentaires de la ou des couches fonctionnelles, constituées d'un métal choisi dans le groupe constitué par Ti, Mo, Al ou d'un alliage comprenant au moins l'un de ces éléments, lesdites couches protectrices supplémentaires étant disposées au contact et respectivement au dessus et au dessous de la ou des couches fonctionnelles, et ayant une épaisseur géométrique comprise entre environ 1 nm et environ 5 nm. De préférence, lesdites couches protectrices supplémentaires sont constituées de Ti.

Un procédé de fabrication d'un vitrage antisolaire comprend par exemple les étapes suivantes :

- fabrication d'un substrat verrier,
- dépôt sur le substrat verrier d'un empilement de couches par une technique de pulvérisation cathodique sous vide assistée par magnétron, la couche fonctionnelle antisolaire étant obtenue par pulvérisation d'une cible constituée par un alliage de Nickel et de Cuivre, le pourcentage atomique de Cuivre dans l'alliage étant compris entre 1% et 25%, notamment entre 5 et 20%, dans une atmosphère résiduelle d'un gaz neutre tel que l'argon.

Par l'expression « ne comprenant que », on entend au sens de la présente description que l'alliage constituant la couche fonctionnelle comprend uniquement ou très majoritairement les éléments cuivre et nickel, les autres éléments n'étant alors présents que dans une concentration très mineure n'influant pas ou quasiment pas sur les propriétés recherchées du matériau. Par le terme « impuretés inévitables » on entend ainsi que la présence dans l'alliage de Nickel et de Cuivre de certains éléments supplémentaires, en particulier métalliques, ne peut être évitée en raison typiquement de la présence de ces impuretés dans les sources de cuivre et de nickel initialement utilisées ou en raison du mode de dépôt de la couche de Nickel et de cuivre. Généralement, la proportion atomique de chacun des éléments considérés comme impureté dans l'alliage est inférieure 1%, de préférence est inférieure à 0,5% et de manière très préférée est inférieure à 0,1% atomique.

Les exemples qui suivent sont donnés à titre purement illustratifs et ne limitent sous aucun des aspects décrits la portée de la présente invention. A des fins de comparaison, tous les empilements des exemples qui suivent sont synthétisés sur le même substrat verrier Planilux®. Toutes les couches des empilements ont été déposées selon les techniques classiques bien connues de dépôts sous vide par pulvérisation magnétron.

Exemple 1 (selon l'invention):

Dans cet exemple selon l'invention, on a déposé, selon les techniques magnétrons classiques, sur un substrat en verre du type Planilux® commercialisé par la société déposante, un empilement constitué par la séquence de couches suivantes:

| Verre | /$Si_3N_4$ | /$Ni_{80}Cu_{20}$* | /$Si_3N_4$ |
|---|---|---|---|
| | (52nm) | (15nm) | (54nm) |
| *80% atomique de Nickel, 20% atomique de Cuivre | | | |

La couche métallique fonctionnelle en NiCu est obtenue par la technique de pulvérisation magnétron à partir d'une cible constituée par un alliage comprenant environ 80% atomique de Nickel et environ 20% atomique de Cuivre. Aucune difficulté n'a été observée lors du dépôt de la couche par les techniques de pulvérisation assistée par champ magnétique (magnétron).

Il a été vérifié par analyse microsonde de Castaing (aussi appelé EPMA ou electron probe microanalyser selon l'appellation Anglaise) et SIMS (spectrométrie de masse à ionisation secondaire) de la couche finalement obtenue que la composition de la couche métallique finalement obtenue correspond sensiblement à la composition de la cible initiale.

Le substrat muni de son empilement a ensuite été soumis à un traitement thermique consistant en un chauffage à 650°C pendant huit minutes suivi d'une trempe. Ce traitement est représentatif des conditions subies par le vitrage si celui-ci doit être trempé.

Sur ce vitrage selon l'invention, on a mesuré le facteur de transmission lumineuse $T_L$ et l'émissivité normale avant et après le traitement thermique, selon les normes précédemment décrites.

Exemple 2 (selon l'invention):

Dans cet exemple selon l'invention, on a déposé sur un substrat verre du type Planilux®, selon les techniques magnétrons et à partir d'une cible d'un alliage approprié de Nickel et de Cuivre, un empilement constitué par la séquence de couches suivantes:

| Verre | /$Si_3N_4$ | /$Ni_{93}Cu_7$ | /$Si_3N_4$ |
|---|---|---|---|
| | (52nm) | (15 nm) | (54nm) |

Aucune difficulté n'a été observée lors du dépôt de la couche par les techniques du magnétron, malgré la forte concentration de Nickel dans l'alliage.

Exemple 3 (comparatif):

Dans cet exemple, on a pratiqué de façon identique à l'exemple 1 et obtenu un empilement sensiblement identique par la technique de pulvérisation magnétron, à l'exception de la cible utilisée pour le dépôt de la couche fonctionnelle qui est cette fois constituée d'un alliage de Nickel et de Chrome, conformément à l'enseignement du brevet EP 747 329 B2, exemple 22.

Plus précisément, on a déposé, selon les techniques magnétrons classiques, sur le même substrat en verre du type Planilux®, un empilement constitué par la séquence de couches suivantes:

| Verre | /$Si_sN_4$ | /$Ni_{80}Cr_{20}$* | /$Si_3N_4$ |
|-------|-----------|--------------------|-----------|
|       | (52nm)    | (15nm)             | (54nm)    |

*80% atomique de Nickel, 20% atomique de Chrome

La couche métallique fonctionnelle en NiCr obtenue est constituée d'un alliage de 80% atomique de Nickel et 20% atomique de Chrome.

Exemple 4 (comparatif) :

Dans cet exemple comparatif, pour obtenir un vitrage de contrôle solaire tel que décrit dans la publication EP 0067257, on a déposé sur un substrat en verre du type Planilux®, selon les mêmes techniques magnétrons, l'empilement suivant, dont la couche active, c'est-à-dire celle agissant sur le rayonnement solaire traversant ledit vitrage, est une couche d'un alliage Ni-Cu dont la proportion de cuivre est très majoritaire :

| Verre | /$Si_3N_4$ | /$Ni_{25}Cu_{75}$* | /$Si_3N_4$ |
|-------|-----------|--------------------|-----------|
|       | (55nm)    | (15nm)             | (50nm)    |

*25% atomique de Nickel, 75% atomique de Chrome

Les valeurs des mesures effectuées sur les échantillons selon les exemples 1 et 2 selon l'invention et selon les exemples comparatifs 3 et 4 sont regroupés dans le tableau 1 ci-dessous :

Tableau 1

|  |  | Exemple 1 | Exemple2 | Exemple3 | Exemple4 |
|---|---|-----------|----------|----------|----------|
| Couche fonctionnelle | | $Ni_{80}Cu_{20}$ | $Ni_{93}Cu_7$ | $Ni_{80}Cr_{20}$ | $Ni_{25}Cu_{75}$ |
| Epaisseur couche active (nm) | | 15 | 15 | 15 | 17 |
| $T_L$ (%) | Avant trempe | 40 | 48 | 38 | 29 |
| | Après trempe | 40 | 48 | 42 | 28 |
| $\varepsilon_N$ (%) | Avant trempe | 29 | 24 | 48 | 20 |
| | Après trempe | 25 | 19 | 38 | 20 |
| Figure de mérite ($T_L/\varepsilon_N$) | | 1, 6 | 2,5 | 1,1 | 1,4 |

Exemples 5 à 9 :

Pour vérifier la résistance chimique des couches fonctionnelles déposées selon les exemples précédents, on a procédé au dépôt des mêmes différentes compositions d'alliage, toujours par la technique du magnétron, sur une sous-couche de 10 nm de nitrure de silicium préalablement déposée sur la surface du verre. L'épaisseur de la couche fonctionnelle est de 10 nm pour chaque échantillon. Le test hydrolytique précédemment décrit est ensuite pratiqué sur les substrats et l'évolution de la résistance par carré des couches est mesurée après 4 jours et 60 jours d'exposition. Les résultats sont donnés dans le tableau 2 qui suit :

Tableau 2

|  |  | Exemple5 | Exemple6 | Exemple7 | Exemple8 |
|---|---|----------|----------|----------|----------|
| Couche fonctionnelle | | $Ni_{80}Cu_{20}$ | $Ni_{93}Cu_7$ | $Ni_{80}Cr_{20}$ | $Ni_{25}Cu_{75}$ |

(suite)

|  |  | Exemple5 | Exemple6 | Exemple7 | Exemple8 |
|---|---|---|---|---|---|
| Résistivité ($\mu\Omega$.cm) | initiale | 43 | 27 | 115 | 43 |
|  | 4 jours | 46 | 31 | 120 | isolant |
|  | 60 jours | 49 | 32 | 124 | isolant |

La comparaison des données reportées dans les tableaux 1 à 2 démontre les avantages et la supériorité liés à l'utilisation d'une couche fonctionnelle selon l'invention.

En particulier :

Par comparaison des données reportées dans le tableau 1, il est manifeste que les vitrages comprenant une couche fonctionnelle selon l'invention présente le meilleur compromis entre les propriétés d'isolation énergétique et les propriétés lumineuses, c'est-à-dire les plus fortes valeurs de figure de mérite ($T_L/\varepsilon_N$).

Plus particulièrement, la comparaison des exemples 1 ou 2 selon l'invention avec l'exemple 3 donné à titre comparatif montre que les vitrages munis des couches fonctionnelles constituées par l'alliage du type NiCu selon l'invention présente des propriétés optiques supérieures par rapport à ceux déjà connus comprenant une couche d'un alliage correspondant de Nickel et de Chrome. Additionnellement, on observe dans le tableau 1 que le coefficient $\varepsilon_n$ des vitrages est significativement plus faible pour les vitrages munis de la couche fonctionnelle selon l'invention, alors que la transmission lumineuse $T_L$ est plus élevée.

Le vitrage muni de l'empilement selon l'exemple 4 comparatif, dans lequel la couche fonctionnelle est constituée d'un alliage Ni-Cu comprenant majoritairement du cuivre, présente une figure de mérite se rapprochant de celle des vitrages selon l'invention. Cependant, les données reportées dans le tableau 2 indiquent qu'une telle couche ne peut être garantie comme durable dans le temps, sa résistance hydrolytique étant beaucoup trop faible.

Selon un autre avantage, les empilements antisolaires selon la présente invention, dont la couche active est à base d'un alliage Ni-Cu dont l'épaisseur est relativement faible, c'est-à-dire de l'ordre de 10 à 20 nanomètres, sont extrêmement simples et peu coûteux à fabriquer, notamment par la technique du dépôt sous vide par pulvérisation cathodique dite magnétron : une faible épaisseur de la couche d'alliage permet en effet un gain de productivité non négligeable, car la vitesse de défilement du substrat dans la chambre de dépôt est directement fonction de l'épaisseur désirée de ladite couche.

On a également mesuré, cette fois sur un échantillon préparé selon l'exemple 1, la résistance hydrolytique de l'empilement des couches (simulation de climat) selon le test suivant :

Dans une chambre fermée, le vitrage muni de son empilement est soumis à des conditions d'humidité et température sévères (95% d'humidité relative à 50°C) pendant une durée totale de 28 jours, pour en provoquer le vieillissement accéléré. Le test est pratiqué sur un premier échantillon selon l'exemple 1 n'ayant pas subit le traitement thermique final et sur un deuxième échantillon porté finalement à 620°C pendant 8 minutes.

L'émissivité normale de l'empilement est mesurée avant de commencer le test puis après 8, 20 et 28 jours de test.

Aucune modification de la valeur initiale mesurée de l'émissivité normale n'a été détectée au bout de 8, 20 et 28 jours de tests.

Le test de durabilité précédent montre que de tels empilements peuvent être sans difficulté déposées en face 2 d'un vitrage simple, sans risque de dégradation de celle-ci, par action chimique (humidité) ou même par action mécanique (abrasion de l'empilement).

Les caractéristiques colorimétriques dans le système L*, b*, a* des vitrages selon l'exemple 1, ont été mesurées en transmission, et en réflexion (coté extérieur) avant et après le recuit et la trempe.

Les données mesurées sont reportées dans le tableau 3 qui suit :

Tableau 3

| Exemple | | TRANSMISSION LUMINEUSE | | | REFLEXION LUMINEUSE | | |
|---|---|---|---|---|---|---|---|
|  |  | $T_L$ | $a^*_T$ | $b^*_T$ | $R_{Lext}$ | $a^*_{Rext}$ | $b^*_{Rext}$ |
| Exemple 1 | Avant trempe | 40 | -5,4 | 3,3 | 21 | 0,2 | -7,9 |
|  | Après trempe | 40 | -5,1 | 2,4 | 21 | 0,2 | -7,5 |

Les données reportées dans le tableau 3 montrent les propriétés idéales de colorimétrie des vitrages munis des empilements selon l'invention : Les paramètres a* et b* selon l'exemple 1 sont relativement faibles, en transmission comme en réflexion. De telles propriétés colorimétriques entraînent une couleur neutre ou bleue-verte peu intense des vitrages, telle qu'actuellement recherchée dans le domaine du bâtiment.

Dans le système colorimétrique L*, a*, b* et sous incidence normale, la variation de couleur du vitrage en transmission liée au traitement thermique, a été quantifiée en utilisant la grandeur ΔE classiquement utilisée et définie par la relation:

$$\Delta E = \sqrt{(\Delta a^*)^2 + (\Delta b^*)^2 + (\Delta L^*)^2}$$

Les essais effectués par le demandeur ont tous montré que ladite grandeur ΔE est toujours inférieure à 3 et le plus souvent inférieure à 2 pour les vitrages selon l'invention, ce qui prouve que le substrat revêtu d'un tel empilement peut subir des traitements thermiques éventuellement suivis d'une trempe sans que ses propriétés optiques et en particulier sa couleur perçue soient sensiblement modifiées.

## Revendications

1.  Vitrage à propriété de contrôle solaire comprenant au moins un substrat verrier sur lequel est déposé un empilement de couches, ledit empilement comprenant une couche constituée dans un alliage comprenant du Nickel et du Cuivre, alliage dans lequel le pourcentage atomique de Cuivre est supérieur à 1% et inférieur à 25% et dans lequel le pourcentage atomique de Nickel est supérieur à 75% et inférieur à 99%.

2.  Vitrage antisolaire selon la revendication 1, dans lequel le pourcentage atomique du cuivre dans l'alliage est compris entre 5% et 20%.

3.  Vitrage antisolaire selon la revendication 1, dans lequel le pourcentage atomique du Nickel dans l'alliage est compris entre 80% et 95%.

4.  Vitrage antisolaire selon l'une des revendications précédentes, dans lequel l'épaisseur de ladite couche fonctionnelle est comprise entre 5 et 25 nanomètres, de préférence entre 10 et 20 nanomètres.

5.  Vitrage antisolaire selon l'une des revendications précédentes, dans lequel l'alliage ne comprend que du Nickel, du Cuivre et des impuretés inévitables.

6.  Vitrage antisolaire selon l'une des revendications précédentes, dans lequel l'empilement est constitué par la succession des couches suivantes, à partir de la surface du substrat verrier:

    - une ou plusieurs couches inférieures de protection de la couche fonctionnelle contre la migration des ions alcalins issus du substrat verrier, d'épaisseur géométrique, au total, comprise entre 5 et 150 nm,
    - ladite couche fonctionnelle constituée par ledit alliage,
    - une ou plusieurs couches supérieures de protection de la couche fonctionnelle contre l'oxygène de l'air, notamment lors d'un traitement thermique tel qu'une trempe ou un recuit, la ou lesdites couches étant d'épaisseur géométrique, au total, comprise entre 5 et 150 nm.

7.  Vitrage antisolaire selon la revendication précédente, dans lequel la ou les couches de protection inférieures et supérieures sont choisies parmi le nitrure de Silicium éventuellement dopé par Al, Zr, B, le nitrure d'aluminium AlN, l'oxyde d'étain, un oxyde mixte de zinc ou d'étain $SnyZn_zO_x$, l'oxyde de silicium $SiO_2$, l'oxyde de titane non dopé $TiO_2$, les oxynitrures de silicium $SiO_xN_y$.

8.  Vitrage antisolaire selon l'une des revendications précédentes dans lequel l'empilement comprend la succession des couches suivantes, à partir de la surface du substrat verrier :

    - une couche inférieure d'épaisseur comprise entre 5 et 150 nm, de préférence entre 30 et 70 nm, de nitrure de Silicium éventuellement dopé par Al, Zr, B ou de le nitrure d'aluminium AlN,
    - ladite couche fonctionnelle constituée par ledit alliage,

- une couche supérieure d'épaisseur comprise entre 5 et 150 nm, de préférence entre 30 et 70 nm, de nitrure de Silicium éventuellement dopé par Al, Zr, B ou de nitrure d'aluminium AlN.

9. Vitrage antisolaire selon l'une des revendications précédentes, dans lequel l'empilement comprend au moins deux couches fonctionnelles constituées par ledit alliage comprenant ou constituée par du Nickel et du Cuivre, chacune desdites couches étant séparée dans l'empilement de la suivante par au moins une couche intermédiaire d'un matériau diélectrique.

10. Vitrage antisolaire selon la revendication précédente, dans lequel ladite couche intermédiaire comprend au moins une couche d'un matériau choisi parmi le nitrure de Silicium éventuellement dopé par Al, Zr, B, le nitrure d'aluminium AlN, l'oxyde d'étain, un oxyde mixte de zinc ou d'étain $SnyZn_zO_x$, l'oxyde de silicium $SiO_2$, l'oxyde de titane non dopé $TiO_2$, les oxynitrures de silicium $SiO_xN_y$.

11. Vitrage antisolaire selon la revendication précédente, dans lequel l'empilement comprend la succession des couches suivantes, à partir de la surface du substrat verrier :

   - une couche inférieure d'épaisseur comprise entre 5 et 150 nm, de préférence entre 30 et 70 nm, de nitrure de Silicium éventuellement dopé par Al, Zr, B ou le nitrure d'aluminium AlN,
   - une première couche fonctionnelle constituée essentiellement par ledit alliage comprenant ou constituée par du Nickel et du Cuivre,
   - une couche intermédiaire d'épaisseur comprise entre 5 et 150 nm, comprenant au moins une couche d'un matériau choisi parmi le nitrure de Silicium éventuellement dopé par Al, Zr, B, le nitrure d'aluminium AlN, l'oxyde d'étain, un oxyde mixte de zinc ou d'étain $SnyZn_zO_x$, l'oxyde de silicium $SiO_2$, l'oxyde de titane non dopé $TiO_2$, les oxynitrures de silicium $SiO_xN_y$, de préférence de nitrure de silicium éventuellement dopé,
   - une deuxième couche fonctionnelle constituée essentiellement par ledit alliage comprenant ou constituée par du Nickel et du Cuivre,
   - une couche supérieure d'épaisseur comprise entre 5 et 150 nm, de préférence entre 30 et 70 nm, de nitrure de Silicium éventuellement dopé par Al, Zr, B ou le nitrure d'aluminium AlN.

12. Vitrage antisolaire selon l'une des revendications précédentes dans lequel l'empilement comprend en outre des couches protectrices d'un métal choisi dans le groupe constitué par Ti, Mo, Al ou d'un alliage comprenant au moins l'un de ces éléments, lesdites couches étant disposées au contact et au dessus et au dessous de la ou des couches fonctionnelles, chaque couche protectrice ayant une épaisseur géométrique comprise entre environ 1 nm et environ 5 nm.

## Patentansprüche

1. Sonnenschutzglas, das mindestens ein Glassubstrat enthält, auf das eine Anordnung von Schichten aufgebracht ist, wobei die Anordnung eine Schicht enthält, die von einer Legierung gebildet ist, die Nickel und Kupfer enthält, wobei in der Legierung der atomare Prozentualanteil von Kupfer größer als 1 % und kleiner als 25 % ist und wobei der atomare Prozentualanteil von Nickel größer als 75 % und kleiner als 99 % ist.

2. Sonnenschutzglas nach Anspruch 1, wobei der atomare Prozentualanteil von Kupfer in der Legierung zwischen 5 % und 20 % beträgt.

3. Sonnenschutzglas nach Anspruch 1, wobei der atomare Prozentualanteil von Nickel in der Legierung zwischen 80 % und 95 % beträgt.

4. Sonnenschutzglas nach einem der vorhergehenden Ansprüche, wobei die Dicke der funktionellen Schicht zwischen 5 und 25 Nanometer, bevorzugt zwischen 10 und 20 Nanometer, beträgt.

5. Sonnenschutzglas nach einem der vorhergehenden Ansprüche, wobei die Legierung nur Nickel, Kupfer und unvermeidbare Verunreinigungen enthält.

6. Sonnenschutzglas nach einem der vorhergehenden Ansprüche, wobei die Anordnung von der Abfolge der folgenden Schichten, ausgehend von der Oberfläche des Glassubstrats, gebildet ist:

- eine oder mehrere untere Schichten zum Schutz der funktionellen Schicht vor der Migration der von dem Glassubstrat stammenden Alkaliionen, mit einer geometrischen Dicke, die insgesamt zwischen 5 und 150 nm beträgt,
- die funktionelle Schicht, die von der Legierung gebildet ist,
- eine oder mehrere obere Schichten zum Schutz der funktionellen Schicht vor dem Sauerstoff der Luft, insbesondere bei einer Wärmebehandlung wie ein Vorspannen oder ein Tempern, wobei die Schicht(en) eine geometrischen Dicke hat bzw. haben, die insgesamt zwischen 5 und 150 nm beträgt.

7. Sonnenschutzglas nach dem vorhergehenden Anspruch, wobei die untere(n) und obere(n) Schutzschicht(en) ausgewählt sind aus Siliziumnitrid, das gegebenenfalls mit Al, Zr, B dotiert ist, Aluminiumnitrid AlN, Zinnoxid, einem Mischoxid aus Zink oder aus Zinn $Sn_yZn_zO_x$, Siliziumoxid $SiO_2$, undotiertem Titanoxid $TiO_2$, den Siliziumoxinitriden $SiO_xN_y$.

8. Sonnenschutzglas nach einem der vorhergehenden Ansprüche, wobei die Anordnung die Abfolge der folgenden Schichten, ausgehend von der Oberfläche des Glassubstrats, enthält:

- eine untere Schicht mit einer Dicke, die zwischen 5 und 150 nm, bevorzugt zwischen 30 und 70 nm, beträgt, aus Siliziumnitrid, das gegebenenfalls mit Al, Zr, B dotiert ist, oder aus Aluminiumnitrid AlN,
- die funktionelle Schicht, die von der Legierung gebildet ist,
- eine obere Schicht mit einer Dicke, die zwischen 5 und 150 nm, bevorzugt zwischen 30 und 70 nm, beträgt, aus Siliziumnitrid, das gegebenenfalls mit Al, Zr, B dotiert ist, oder aus Aluminiumnitrid AlN.

9. Sonnenschutzglas nach einem der vorhergehenden Ansprüche, wobei die Anordnung mindestens zwei funktionelle Schichten enthält, die von der Legierung gebildet sind, die Nickel und Kupfer enthält oder aus diesen besteht, wobei jede der Schichten in der Anordnung von der folgenden durch mindestens eine Zwischenschicht aus einem dielektrischen Material getrennt ist.

10. Sonnenschutzglas nach dem vorhergehenden Anspruch, wobei die Zwischenschicht mindestens eine Schicht aus einem Material enthält, das ausgewählt ist aus Siliziumnitrid, das gegebenenfalls mit Al, Zr, B dotiert ist, Aluminiumnitrid AlN, Zinnoxid, einem Mischoxid aus Zink oder aus Zinn $SnyZn_zO_x$, Siliziumoxid $SiO_2$, undotiertem Titanoxid $TiO_2$, den Siliziumoxinitriden $SiO_xN_y$.

11. Sonnenschutzglas nach dem vorhergehenden Anspruch, wobei die Anordnung die Abfolge der folgenden Schichten, ausgehend von der Oberfläche des Glassubstrats, enthält:

- eine untere Schicht mit einer Dicke, die zwischen 5 und 150 nm, bevorzugt zwischen 30 und 70 nm, beträgt, aus Siliziumnitrid, das gegebenenfalls mit Al, Zr, B dotiert ist, oder aus Aluminiumnitrid AlN,
- eine erste funktionelle Schicht, die im Wesentlichen von der Legierung gebildet ist, die Nickel und Kupfer enthält oder aus diesen besteht,
- eine Zwischenschicht mit einer Dicke, die zwischen 5 und 150 nm beträgt, die mindestens eine Schicht aus einem Material enthält, das ausgewählt ist aus Siliziumnitrid, das gegebenenfalls mit Al, Zr, B dotiert ist, Aluminiumnitrid AlN, Zinnoxid, einem Mischoxid aus Zink oder aus Zinn $Sn_yZn_zO_x$, Siliziumoxid $SiO_2$, undotiertem Titanoxid $TiO_2$, den Siliziumoxinitriden $SiO_xN_y$, bevorzugt aus gegebenenfalls dotiertem Siliziumnitrid,
- eine zweite funktionelle Schicht, die im Wesentlichen von der Legierung gebildet ist, die Nickel und Kupfer enthält oder aus diesen besteht,
- eine obere Schicht mit einer Dicke, die zwischen 5 und 150 nm, bevorzugt zwischen 30 und 70 nm, beträgt, aus Siliziumnitrid, das gegebenenfalls mit Al, Zr, B dotiert ist, oder aus Aluminiumnitrid AlN.

12. Sonnenschutzglas nach einem der vorhergehenden Ansprüche, wobei die Anordnung ferner Schutzschichten aus einem Metall enthält, das ausgewählt ist aus der Gruppe bestehend aus Ti, Mo, Al oder aus einer Legierung, die mindestens eines dieser Elemente enthält, wobei die Schichten in Kontakt mit und oberhalb und unterhalb der funktionellen Schicht(en) angeordnet sind, wobei jede Schutzschicht eine geometrische Dicke hat, die zwischen etwa 1 nm und etwa 5 nm beträgt.

**Claims**

1. A glazing with a solar control property comprising at least one glass substrate deposited on which is a stack of layers, said stack comprising a layer consisting of an alloy comprising nickel and copper, alloy wherein the atomic percentage of copper is greater than 1% and less than 25% and wherein the atomic percentage of nickel is greater than 75% and less than 99%.

2. The solar-protection glazing as claimed in claim 1, wherein the atomic percentage of copper in the alloy is between 5% and 20%.

3. The solar-protection glazing as claimed in claim 1, wherein the atomic percentage of nickel in the alloy is between 80% and 95%.

4. The solar-protection glazing as claimed in one of the preceding claims, wherein the thickness of said functional layer is between 5 and 25 nanometers, preferably between 10 and 20 nanometers.

5. The solar-protection glazing as claimed in one of the preceding claims, wherein the alloy comprises only nickel, copper and inevitable impurities.

6. The solar-protection glazing as claimed in one of the preceding claims, wherein the stack consists of the sequence of the following layers, starting from the surface of the glass substrate:

   - one or more lower layers for protecting the functional layer against the migration of alkaline metal ions from the glass substrate, having a geometric thickness, in total, between 5 and 150 nm,
   - said functional layer consisting of said alloy,
   - one or more upper layers for protecting the functional layer against oxygen from the air, in particular during a heat treatment such as a tempering or an annealing, said layer or layers having a geometric thickness, in total, between 5 and 150 nm.

7. The solar-protection glazing as claimed in the preceding claim, wherein the lower and upper protective layers are chosen from silicon nitride optionally doped with Al, Zr or B, aluminum nitride AlN, tin oxide, a mixed oxide of zinc or tin $Sn_yZn_zO_x$, silicon oxide $SiO_2$, undoped titanium oxide $TiO_2$, and silicon oxynitrides $SiO_xN_y$.

8. The solar-protection glazing as claimed in one of the preceding claims, wherein the stack comprises the sequence of the following layers, starting from the surface of the glass substrate:

   - a lower layer having a thickness between 5 and 150 nm, preferably between 30 and 70 nm, of silicon nitride optionally doped with Al, Zr or B or of aluminum nitride AlN,
   - said functional layer consisting of said alloy,
   - an upper layer having a thickness between 5 and 150 nm, preferably between 30 and 70 nm, of silicon nitride optionally doped with Al, Zr or B or of aluminum nitride AlN.

9. The solar-protection glazing as claimed in one of the preceding claims, wherein the stack comprises at least two functional layers consisting of said alloy comprising or consisting of nickel and copper, each of said layers being separated in the stack from the next by at least one intermediate layer of a dielectric material.

10. The solar-protection glazing as claimed in the preceding claim, wherein said intermediate layer comprises at least one layer of a material chosen from silicon nitride optionally doped with Al, Zr or B, aluminum nitride AlN, tin oxide, a mixed oxide of zinc or tin $Sn_yZn_zO_x$, silicon oxide $SiO_2$, undoped titanium oxide $TiO_2$, and silicon oxynitrides $SiO_xN_y$.

11. The solar-protection glazing as claimed in the preceding claim, wherein the stack comprises the sequence of the following layers, starting from the surface of the glass substrate:

   - a lower layer having a thickness between 5 and 150 nm, preferably between 30 and 70 nm, of silicon nitride optionally doped with Al, Zr or B or of aluminum nitride AlN,
   - a first functional layer essentially consisting of said alloy comprising or consisting of nickel and copper,
   - an intermediate layer having a thickness between 5 and 150 nm, comprising at least one layer of a material chosen from silicon nitride optionally doped with Al, Zr or B, aluminum nitride AlN, tin oxide, a mixed oxide of zinc or tin $Sn_yZn_zO_x$, silicon oxide $SiO_2$, undoped titanium oxide $TiO_2$, and silicon oxynitrides $SiO_xN_y$, preferably of optionally doped silicon nitride,
   - a second functional layer essentially consisting of said alloy comprising or consisting of nickel and copper,

- an upper layer having a thickness between 5 and 150 nm, preferably between 30 and 70 nm, of silicon nitride optionally doped with Al, Zr or B or of aluminum nitride AlN.

12. The solar-protection glazing as claimed in one of the preceding claims, wherein the stack also comprises protective layers of a metal chosen from the group consisting of Ti, Mo, Al or of an alloy comprising at least one of these elements, said layers being placed in contact and on top and underneath of the functional layer or layers, each protective layer having a geometric thickness between around 1 nm and around 5 nm.

**RÉFÉRENCES CITÉES DANS LA DESCRIPTION**

**Documents brevets cités dans la description**

- WO 0121540 A
- EP 747329 B2
- EP 067257 A1
- GB 1309881 A
- EP 0067257 A